# DEMANDE DE BREVET EUROPEEN

(11) **EP 4 162 816 A1**
(43) Date de publication de la demande: **12.04.2023**
(21) Numéro de dépôt: 21201328.8
(22) Date de dépôt: 06.10.2021
(51) Int. Cl.: A23P 30/20

(54) **IMPRIMANTE TRIDIMENSIONNELLE RÉALISANT UNE CUISSON D'UN ALIMENT**

(71) Demandeur: SEB S.A., 69130 Ecully (FR); DAGO, 59100 Roubaix (FR)
(72) Inventeur: BLANDIN, Loïc, 69134 Ecully Cedex (FR); REGNIER, Matthieu, 59100 Roubaix (FR); MICHON, Camille, 92120 Montrouge (FR); PERRE, Giana, 92120 Palaiseau (FR); GUENARD LAMPRON, Valérie, 94160 Saint-Mandé (FR); MASBERNAT, Laurena, 75014 Paris (FR)
(74) Mandataire: Germain Maureau

(57) **Abrégé**

Imprimante tridimensionnelle (1, 2, 3) pour une fabrication d'une préparation alimentaire (52) à partir d'au moins un aliment (5), comprenant au moins un réservoir (6) contenant l'au moins un aliment (5), et au moins une buse d'extrusion (7) configurée pour déposer un cordon (51) dudit aliment (5) sur une surface d'impression (82) , caractérisée en ce que l'au moins une buse d'extrusion (7) comporte un élément de cuisson (71) configuré pour réaliser par chauffage tout ou partie d'une cuisson du cordon (51) avant un contact avec la surface d'impression (82).

## Description

L'invention concerne le domaine des imprimantes tridimensionnelles et plus particulièrement une imprimante tridimensionnelle pour une fabrication d'une préparation alimentaire et un procédé de fabrication d'une préparation alimentaire mettant en œuvre une telle imprimante tridimensionnelle.

Un aliment désigne une substance comestible qui est notamment caractérisée par la matière qui la compose comme par exemple une sauce tomate, une pâte à gâteau, du chocolat, une purée d'avocat ou une pâte à pizza.

L'aliment est également caractérisé par une texture. Plus précisément, la texture d'un aliment correspond à une qualité physique de l'aliment comprenant sa densité, sa viscosité, et son homogénéité. Ainsi, un même aliment peut avoir plusieurs textures. Par exemple, le beurre a une texture dure à 0°C et visqueuse à 20°C, un biscuit a une texture visqueuse avant une cuisson et croustillante après la cuisson.

L'aliment est enfin caractérisé par un niveau de cuisson. Dans la présente description, la cuisson consiste en un chauffage de l'aliment qui modifie d'une part la matière, par retrait d'au moins une partie de l'eau et réaction chimique, et d'autre part la texture de l'aliment. Le niveau de cuisson va de cru à cuit.

Dans la présente description, l'aliment est adapté à une impression par une imprimante tridimensionnelle. Ainsi, il présente donc une texture ayant une viscosité adaptée à un procédé d'extrusion à chaud ou à froid.

Une préparation alimentaire correspond à une mise en œuvre d'au moins un aliment dans sa géométrie, et sa cuisson. La préparation alimentaire a une forme géométrique définie et un niveau de cuisson donnée. La préparation alimentaire peut comprendre plusieurs aliments. Bien entendu, la préparation alimentaire est également caractérisée par la matière qui la compose et la texture.

Il est connu d'utiliser une imprimante tridimensionnelle pour mettre en œuvre un aliment comme cela est décrit dans le document WO2017006330. Plus précisément, ce document divulgue une imprimante tridimensionnelle comprenant un réservoir contenant un aliment et une buse d'extrusion configurée pour déposer un cordon de l'aliment sur une surface d'impression. L'imprimante tridimensionnelle comprend également un dispositif permettant de cuire le cordon déposé sur la surface d'impression, et donc l'ensemble de la préparation alimentaire. L'inconvénient posé par cette imprimante tridimensionnelle est de cuire l'aliment après dépôt du cordon de l'aliment sur la surface d'impression. Ainsi il n'est pas possible de régler finement la cuisson de l'aliment de sorte à obtenir des formes tridimensionnelles complexes, c'est-à-dire par exemple comprenant un morceau de cordon ne reposant pas par dessus un autre morceau de cordon, et des textures différentes de la préparation alimentaire. De plus, le cordon de l'aliment au contact de la surface d'impression sera très cuit, tandis que le cordon de l'aliment déposé sur le dessus d'un autre cordon sera peu cuit. La cuisson de la préparation alimentaire est donc non homogène.

L'invention a pour but de remédier à tout ou partie des inconvénients précités en proposant, une imprimante tridimensionnelle pour une fabrication d'une préparation alimentaire à partir d'au moins un aliment, comprenant au moins un réservoir contenant l'au moins un aliment, et au moins une buse d'extrusion configurée pour déposer un cordon dudit aliment sur une surface d'impression, caractérisée en ce que l'au moins une buse d'extrusion comporte un élément de cuisson configuré pour réaliser par chauffage tout ou partie d'une cuisson du cordon avant un contact avec la surface d'impression.

Le réservoir comprend un volume intérieur fermé dans lequel l'aliment est positionné. Par exemple, le réservoir peut être un contenant ou un emballage ayant une forme variée, pré-rempli industriellement, ou vide, et solide ou souple.

La surface d'impression est de préférence sensiblement plane.

La buse d'extrusion est reliée au réservoir de sorte à permettre un écoulement de l'aliment à l'extérieur du réservoir, à travers la buse d'extrusion. Une longueur et un diamètre de la buse d'extrusion est prédéterminée et détermine un diamètre du cordon.

La buse d'extrusion est mobile dans un plan d'impression s'étendant parallèlement à la surface d'impression.

La buse d'extrusion et/ou la surface d'impression est mobile suivant un axe normal au plan d'impression.

L'élément de cuisson permet principalement de modifier la consistance de l'aliment.

L'élément de cuisson est positionné au niveau de la buse d'extrusion de sorte à réaliser par chauffage au moins une partie de la cuisson du cordon avant que celui-ci ne soit déposé sur la surface d'impression. Ainsi, l'aliment avant extrusion et l'aliment déposé sur la surface d'impression ne présente pas le même niveau de cuisson. L'élément de cuisson peut plus précisément être positionné dans la buse d'extrusion, par exemple sous la forme d'un fil résistif intégré dans une matière constitutive de la buse d'extrusion, ou être positionné en sortie de la buse d'extrusion. Dans ce dernier cas, le cordon est formé mais n'est pas encore en contact avec la surface d'impression.

Le positionnement spécifique de l'élément de cuisson permet d'appliquer une cuisson localisée sur une partie du cordon de l'aliment. Il est donc possible de faire varier le niveau de cuisson de l'aliment le long du cordon. Par exemple, il est possible de cuire à un premier niveau une première longueur du cordon puis de cuire à un deuxième niveau une deuxième longueur du cordon, le premier et le deuxième niveaux de cuisson étant différents.

Le niveau de cuisson de l'aliment est donc particulièrement précis. Cela a pour avantage d'obtenir une préparation alimentaire dont un aliment présente des niveaux de cuisson différents. Cela permet également de réaliser des préparations alimentaires ayant des formes tridimensionnelles complexes qui seraient impossibles de réaliser sans l'élément de cuisson tel que décrit dans l'invention.

L'invention peut également présenter une ou plusieurs des caractéristiques suivantes prises seules ou en combinaison.

Selon un mode de réalisation, l'élément de cuisson présente une faible inertie par rapport à une vitesse d'extrusion du cordon.

Ainsi, l'élément de cuisson présente une grande réactivité de sorte à réaliser une cuisson localisée du cordon.

Selon un mode de réalisation, l'élément de cuisson est mobile avec la buse d'extrusion.

Selon un mode de réalisation, l'élément de cuisson est mobile autour de la buse d'extrusion dans un plan d'impression s'étendant parallèlement à la surface d'impression.

Ainsi, l'élément de cuisson peut être judicieusement positionné en fonction du déplacement de la buse d'extrusion. Autrement dit, l'élément de cuisson est toujours positionné au plus proche du dépôt du cordon.

Selon un mode de réalisation, l'élément de cuisson tourne autour de la buse d'extrusion de sorte à homogénéiser la cuisson du cordon.

Selon un mode de réalisation, l'élément de cuisson est configuré pour diminuer une teneur en eau du cordon pour conférer une viscosité déterminée au cordon lui permettant d'assurer la tenue sous son propre poids sur la surface d'impression.

L'élément de cuisson permet d'assécher l'aliment déposé sous la forme d'un cordon et ainsi d'obtenir un niveau de cuisson et une texture prédéterminée.

Selon un mode de réalisation, l'élément de cuisson utilise une technologie choisie parmi : un chauffage ohmique, un chauffage par rayonnement, un chauffage par air chaud et un chauffage par conduction

Le chauffage ohmique est un procédé de traitement thermique d'un aliment consistant à induire dans ce dernier de la chaleur par le passage d'un courant électrique. Le chauffage ohmique est basé sur les propriétés de résistance électrique de l'aliment et l'effet Joule.

Le chauffage par rayonnement peut utiliser tous types de rayonnement dont le rayonnement infrarouge, laser, et micro-onde.

Le chauffage par air chaud consiste à entourer le cordon d'un air chaud.

Le chauffage par conduction peut être un chauffage par induction.

Selon un mode de réalisation, l'au moins un réservoir comprend au moins un élément de préchauffage pour augmenter la température de l'aliment à une température supérieure à sa température initiale de manière à permettre une diminution du temps de cuisson post extrusion de l'au moins un aliment.

De manière complémentaire, l'élément de préchauffage permet de modifier la teneur en eau et donc la viscosité de l'aliment.

Après préchauffage, l'aliment doit présenter une texture permettant son extrusion.

Le positionnement spécifique de l'élément de préchauffage permet d'appliquer un chauffage général de l'aliment dans le réservoir de sorte à permettre une cuisson plus rapide par l'élément de cuisson.

L'élément de cuisson et l'élément de préchauffage peuvent être utilisés séquentiellement ou en même temps, et suivant une puissance déterminée, de sorte à parfaitement obtenir le niveau de cuisson et la texture désirée de la préparation alimentaire.

Selon un mode de réalisation, l'élément de préchauffage est mobile avec le réservoir.

Selon un mode de réalisation, l'élément de préchauffage est configuré pour diminuer la teneur en eau de l'aliment en limitant le changement de viscosité de manière à pouvoir conserver la possibilité d'extruder l'au moins un aliment.

Ainsi, l'élément de préchauffage permet d'assécher l'aliment avant son extrusion sous la forme d'un cordon et d'obtenir un niveau de cuisson et une texture prédéterminée de la préparation alimentaire.

Selon un mode de réalisation, l'élément de préchauffage utilise une technologie choisie parmi : un chauffage ohmique, un chauffage par rayonnement, et un chauffage par conduction.

Le chauffage par rayonnement peut utiliser tous types de rayonnement dont le rayonnement infrarouge, laser, et micro-onde.

Le chauffage par conduction peut être un chauffage par induction ou un fil résistif au contact de l'aliment.

Selon un mode de réalisation, l'imprimante tridimensionnelle comprend, en plus de l'au moins un élément de cuisson, au moins un élément de chauffage additionnel configuré pour chauffer la préparation alimentaire imprimée sur la surface d'impression.

L'élément de chauffage additionnel permet de maintenir la température et/ou de modifier le niveau de cuisson de la préparation alimentaire et donc sa texture.

L'élément de chauffage additionnel est positionné de sorte à chauffer la préparation alimentaire déposée sur la surface d'impression. L'élément de chauffage additionnel applique donc un chauffage sur au moins une zone de la préparation alimentaire. L'élément de chauffage additionnel a une action moins ciblée que l'élément de cuisson.

L'élément de chauffage additionnel permet d'induire un gradient de température à l'intérieur de la préparation alimentaire.

L'élément de cuisson, l'élément de préchauffage et l'élément de chauffage additionnel peuvent être utilisés séquentiellement ou en même temps, et suivant une puissance déterminée, de sorte à parfaitement obtenir le ou les niveaux de cuisson et la texture désirée de la préparation alimentaire.

Selon un mode de réalisation, l'élément de chauffage additionnel utilise une technologie choisie parmi : un chauffage par conduction, un chauffage par rayonnement ou un chauffage par air chaud.

Le chauffage par air chaud consiste à souffler un air chaud à proximité ou sur la préparation alimentaire.

Le chauffage par conduction peut être un chauffage par induction.

Selon un mode de réalisation, l'élément de chauffage additionnel est soit intégré dans un plateau dont une face correspond à la surface d'impression, soit agencé en regard de la surface d'impression d'un côté opposé au plateau.

Le plateau de l'imprimante tridimensionnelle est en regard de la buse d'extrusion. Le cordon, et donc la préparation alimentaire, est déposé entre la buse d'extrusion et le plateau, sur la surface d'impression.

Lorsque l'élément de chauffage est intégré au plateau, le chauffage se réalise par conduction dans la préparation alimentaire.

Selon un mode de réalisation, l'élément de chauffage additionnel est mobile avec la buse d'extrusion.

Selon un mode de réalisation, l'élément de chauffage additionnel tourne autour de la buse d'extrusion dans un plan d'impression s'étendant parallèlement à la surface d'impression. Selon un mode de réalisation, l'élément de chauffage additionnel est fixe par rapport à la surface d'impression.

Selon un mode de réalisation, l'élément de cuisson correspond à l'élément de chauffage additionnel.

Selon un mode de réalisation, l'imprimante tridimensionnelle comprend un dispositif d'extrusion configuré pour fabriquer le cordon de l'aliment de manière continue.

Le dispositif d'extrusion permet de faire passer l'aliment du réservoir à la buse d'extrusion de sorte à former un cordon continu de l'aliment.

De manière alternative, le dispositif d'extrusion est configuré pour fabriquer le cordon de l'aliment de manière discontinue, c'est-à-dire en goutte à goutte.

Le dispositif d'extrusion peut être un piston, une pompe, une vis sans fin, ou un élément déformant configuré pour venir appuyer sur un contenant fermé déformable de sorte à extraire l'aliment.

Selon un mode de réalisation, l'imprimante tridimensionnelle comprend une enceinte délimitant un espace interne comprenant au moins une partie de la surface d'impression, ladite enceinte étant configurée pour permettre un contrôle d'une température de l'espace interne de l'enceinte. Ainsi, l'enceinte permet de contrôler parfaitement des conditions notamment de température dans lesquelles l'impression est réalisée.

Selon un mode de réalisation, l'espace interne de l'enceinte comprend au moins en partie l'au moins une buse d'extrusion.

Selon un mode de réalisation, l'imprimante comprend également une cloche disposée sur la surface d'impression et délimitant un espace interne comprenant au moins une partie de préparation alimentaire, ladite cloche étant configurée pour permettre un contrôle d'une température de l'espace interne de la cloche.

L'invention porte également sur un procédé de fabrication d'une préparation alimentaire mettant en œuvre une imprimante tridimensionnelle selon la présente invention.

Selon un mode de réalisation, le procédé comprend une étape de chauffe dans laquelle l'élément de cuisson, et/ou l'au moins un élément de chauffage additionnel, et/ou l'au moins un élément de préchauffage induisent un gradient de température dans l'au moins un aliment ou dans la préparation alimentaire selon une séquence prédéfinie.

Le procédé selon l'invention permet d'obtenir une cuisson parfaitement maitrisée de la préparation alimentaire.

Le procédé de fabrication comprend en outre une étape de chargement dans laquelle le réservoir est rempli avec un aliment. L'aliment pouvant être une préparation réalisée en amont par l'utilisateur ou une préparation industrielle.

L'invention sera mieux comprise, grâce à la description ci-après, qui se rapporte à plusieurs modes de réalisation selon la présente invention, donnés à titre d'exemples non limitatifs et expliqués avec référence aux dessins schématiques annexés, dans lesquels :
La figure 1 est une représentation schématique d'une imprimante tridimensionnelle selon un premier mode de réalisation ;
La figure 2 est une représentation schématique d'une imprimante tridimensionnelle selon un deuxième mode de réalisation ;
La figure 3 est une représentation schématique d'une imprimante tridimensionnelle selon un troisième mode de réalisation ;

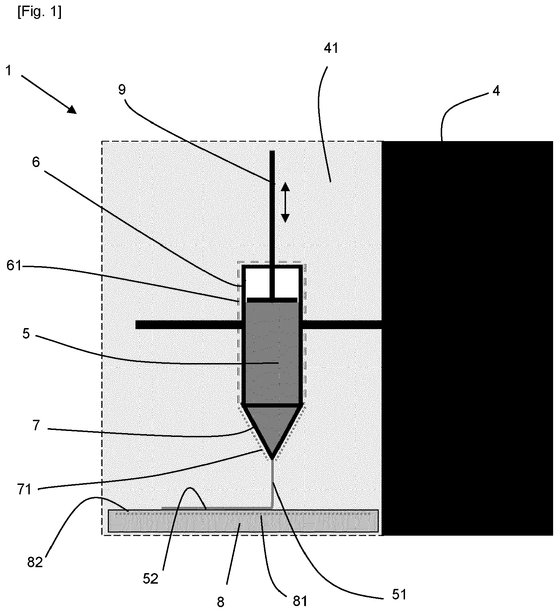

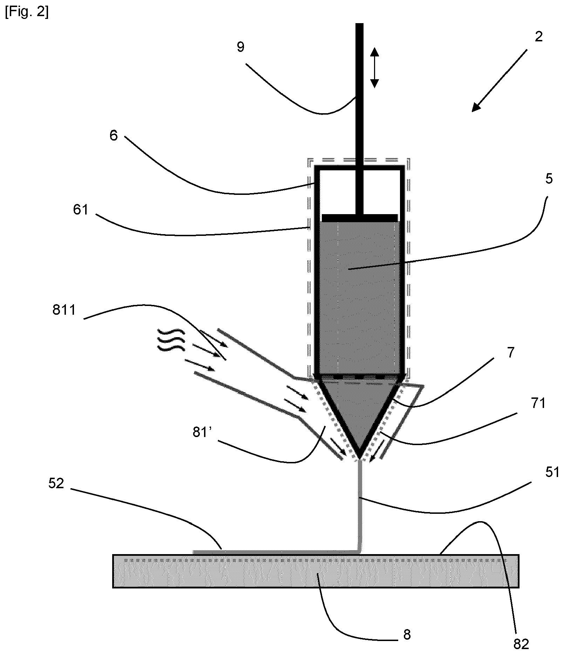

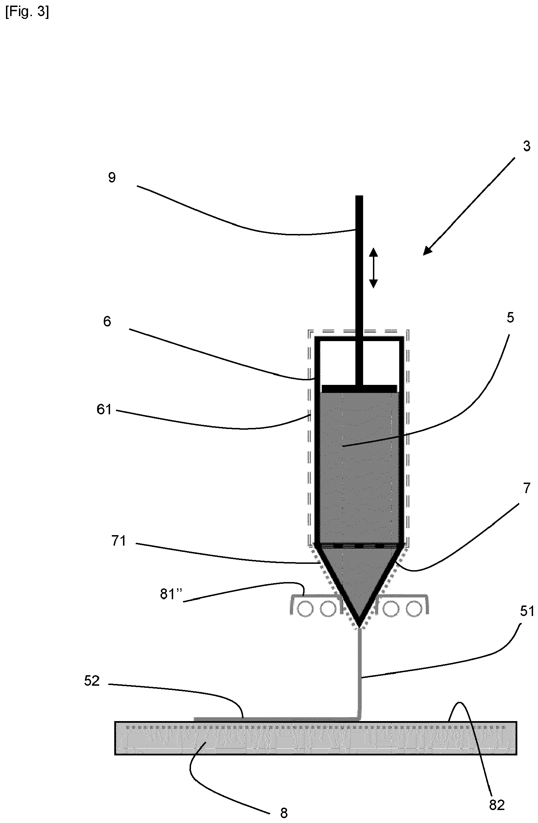

La suite de la description porte sur trois modes de réalisation d'un dispositif selon l'invention, en référence aux figures 1 à 3 dans lesquelles les éléments ou organes structurellement ou fonctionnellement identiques ou similaires sont désignés par des références numériques identiques.

Une imprimante tridimensionnelle 1, 2, 3 selon l'invention est conçue pour une fabrication d'une préparation alimentaire 52 à partir d'un aliment 5. Dans chaque mode de réalisation, l'imprimante tridimensionnelle 1, 2, 3 comprend un réservoir 6, une buse d'extrusion 7, un élément de cuisson 71, un élément de préchauffage 61, un élément de chauffage additionnel 81, 81', 81", un dispositif d'extrusion 9 et un plateau 8.

Le réservoir 6 comprend un volume intérieur fermé dans lequel l'aliment 5 est positionné. Le réservoir 6 peut être de tout type. Sur les figures, le réservoir est un cylindre pré-rempli.

Le plateau 8 présente une surface sensiblement plane correspondant à une surface d'impression 82.

La buse d'extrusion 7 est reliée au réservoir 6 de sorte à permettre un écoulement de l'aliment 5. Une longueur et un diamètre de la buse d'extrusion 7 est prédéterminée. La buse d'extrusion 7 est configurée pour déposer un cordon 51 dudit aliment 5 sur la surface d'impression 82 de sorte à former la préparation alimentaire 52.

La buse d'extrusion 7 est mobile dans un plan d'impression s'étendant parallèlement à la surface d'impression 82. La buse d'extrusion 7 et/ou le plateau 8 est mobile suivant un axe parallèle au plan d'impression et à la surface d'impression 82.

Le dispositif d'extrusion 9 permet de faire passer l'aliment 5 du réservoir 6 à la buse d'extrusion 7 de sorte à former le cordon 51 en continu de l'aliment 5.

L'élément de cuisson 71 est un chauffage ohmique, un chauffage par rayonnement, un chauffage par air chaud ou un chauffage par conduction, qui est configuré pour réaliser par chauffage tout ou partie d'une cuisson du cordon 51 avant un contact avec la surface d'impression 82. L'élément de cuisson 71 est positionné en sortie de la buse d'extrusion 7 de sorte à réaliser par chauffage au moins une partie de la cuisson du cordon 51 avant que celui-ci ne soit déposé sur la surface d'impression 82.

L'élément de cuisson 71 est mobile avec la buse d'extrusion 7 et peut tourner autour de la buse d'extrusion 7 dans le plan d'impression.

L'élément de cuisson 71 diminue une teneur en eau de l'aliment 5 pour conférer une viscosité déterminée au cordon 51 lui permettant d'assurer la tenue sous son propre poids sur la surface d'impression 82.

L'élément de préchauffage 61 est un chauffage ohmique, un chauffage par rayonnement, un chauffage par air chaud ou un chauffage par conduction, qui permet de réduire le temps total d'impression. En effet, l'élément de préchauffage 61 fait passer l'aliment depuis une température initiale vers une température cible de préchauffage, l'aliment passant ensuite de la température de préchauffage à la température de cuisson après son extrusion.

En outre, l'élément de préchauffage 61 est configuré pour diminuer une teneur en eau de l'aliment en limitant le changement de viscosité de manière à pouvoir conserver la possibilité d'extruder l'au moins un aliment.

L'élément de préchauffage 61 est mobile avec le réservoir 6.

L'élément de chauffage additionnel 81, 81', 81" est configuré pour chauffer la préparation alimentaire 52 imprimée sur la surface d'impression 82. L'élément de chauffage additionnel 81, 81', 81" applique donc un chauffage sur au moins une zone de la préparation alimentaire 52. L'élément de chauffage additionnel 81, 81', 81" a une action moins ciblée que l'élément de cuisson 71.

L'élément de chauffage additionnel 81, 81', 81" permet d'induire un gradient de température à l'intérieur de la préparation alimentaire 52.

L'élément de chauffage additionnel 81, 81', 81" permet de maintenir la température et/ou de modifier le niveau de cuisson de la préparation alimentaire 82 et donc sa texture.

Par ailleurs, dans le premier mode de réalisation, l'imprimante tridimensionnelle 1 comprend également une enceinte 41 et un bâti 4.

L'enceinte 41 délimite un espace interne comprenant tout ou partie de la surface d'impression 82. L'enceinte 41 est configurée pour permettre un contrôle d'une température de l'espace interne de l'enceinte 41.

En outre, l'espace interne de l'enceinte 41 comprend au moins en partie l'au moins une buse d'extrusion 7, voire l'ensemble du réservoir 6.

Le bâti 4 supporte l'enceinte 41, le réservoir 6, la buse d'extrusion 7, l'élément de cuisson 71 et le plateau 8.

Dans le premier mode de réalisation, l'élément de chauffage additionnel 81 est un chauffage par conduction intégré dans le plateau 8.

Dans le deuxième mode de réalisation, l'élément de chauffage additionnel 81' est un chauffage par air chaud 811 mobile avec la buse d'extrusion 7.

Dans le troisième mode de réalisation, l'élément de chauffage additionnel 81" est un chauffage par rayonnement mobile avec la buse d'extrusion 7.

Le procédé de fabrication de la préparation alimentaire 52 consiste à mettre en œuvre l'imprimante tridimensionnelle 1, 2, 3 selon l'invention.

Le procédé de fabrication comprend en outre les étapes suivantes :
- Une étape de chargement dans laquelle le réservoir 6 est rempli avec un aliment 5;
- Une étape de chauffe dans laquelle l'aliment 5 est extrudé et, l'élément de cuisson 7, et/ou l'élément de chauffage additionnel 81, 81', 81", et/ou l'élément de préchauffage 61 induisent un gradient de température dans l'aliment 5 selon une séquence prédéfinie.

L'élément de cuisson 71, l'élément de préchauffage 61 et l'élément de chauffage additionnel 81, 81', 81" peuvent être utilisés séquentiellement ou en même temps, et suivant une puissance déterminée, de sorte à parfaitement obtenir le niveau de cuisson et la texture désirée de la préparation alimentaire 52.

Le niveau de cuisson de la préparation alimentaire 52 est donc particulièrement précis et il est possible d'obtenir une préparation alimentaire dont un aliment présente des niveaux de cuisson différents.

Bien entendu, l'invention n'est pas limitée aux modes de réalisation décrits et représentés aux figures annexées. Des modifications restent possibles, notamment du point de vue de la constitution des divers éléments ou par substitution d'équivalents techniques, sans sortir pour autant du domaine de protection de l'invention.

## Revendications

1. Imprimante tridimensionnelle (1, 2, 3) pour une fabrication d'une préparation alimentaire (52) à partir d'au moins un aliment (5), comprenant au moins un réservoir (6) contenant l'au moins un aliment (5), et au moins une buse d'extrusion (7) configurée pour déposer un cordon (51) dudit aliment (5) sur une surface d'impression (82), **caractérisée en ce que** l'au moins une buse d'extrusion (7) comporte un élément de cuisson (71) configuré pour réaliser par chauffage tout ou partie d'une cuisson du cordon (51) avant un contact avec la surface d'impression (82).

2. Imprimante tridimensionnelle (1, 2, 3) selon la revendication 1, dans laquelle l'élément de cuisson (71) est configuré pour diminuer une teneur en eau du cordon (51) pour conférer une viscosité déterminée au cordon (51) lui permettant d'assurer la tenue sous son propre poids sur la surface d'impression (82).

3. Imprimante tridimensionnelle (1, 2, 3) selon l'une quelconque des revendications précédentes, dans laquelle l'élément de cuisson (71) utilise une technologie choisie parmi : un chauffage ohmique, un chauffage par rayonnement, un chauffage par air chaud et un chauffage par conduction.

4. Imprimante tridimensionnelle (1, 2, 3) selon l'une quelconque des revendications précédentes, dans laquelle l'au moins un réservoir (6) comprend au moins un élément de préchauffage (61) pour augmenter la température de l'aliment à une température supérieure à sa température initiale de manière à permettre une diminution du temps de cuisson post extrusion de l'au moins un aliment (5).

5. Imprimante tridimensionnelle (1, 2, 3) selon la revendication 4, dans laquelle l'élément de préchauffage (61) est configuré pour diminuer la teneur en eau de l'aliment (5) en limitant le changement de viscosité de manière à pouvoir conserver la possibilité d'extruder l'au moins un aliment.

6. Imprimante tridimensionnelle (1, 2, 3) selon la revendication 4 ou 5, dans laquelle l'élément de préchauffage (61) utilise une technologie choisie parmi : un chauffage ohmique, un chauffage par rayonnement, et un chauffage par conduction.

7. Imprimante tridimensionnelle (1, 2, 3) selon l'une quelconque des revendications précédentes, comprenant, en plus de l'au moins un élément de cuisson (71), au moins un élément de chauffage additionnel (81, 81', 81") configuré pour chauffer la préparation alimentaire (52) imprimée sur la surface d'impression (82).

8. Imprimante tridimensionnelle (1, 2, 3) selon la revendication 7, dans laquelle l'élément de chauffage additionnel (81, 81', 81") utilise une technologie choisie parmi: un chauffage par conduction, un chauffage par rayonnement ou un chauffage par air chaud.

9. Imprimante tridimensionnelle (1, 2, 3) selon la revendication 7 ou 8, dans laquelle l'élément de chauffage additionnel (81, 81', 81") est soit intégré dans un plateau (8) dont une face correspond à la surface d'impression (82), soit agencé en regard de la surface d'impression (82) d'un côté opposé au plateau (8).

10. Imprimante tridimensionnelle (1, 2, 3) selon l'une quelconque des revendications précédentes, comprenant un dispositif d'extrusion (9) configuré pour fabriquer le cordon (51) de l'aliment (5) de manière continue.

11. Imprimante tridimensionnelle (1) selon l'une quelconque des revendications précédentes, comprenant une enceinte (41) délimitant un espace interne comprenant au moins une partie de la surface d'impression (82), ladite enceinte (41) étant configurée pour permettre un contrôle d'une température de l'espace interne de l'enceinte (41).

12. Imprimante tridimensionnelle (1) selon la revendication 11, dans laquelle l'espace interne de l'enceinte (41) comprend au moins en partie l'au moins une buse d'extrusion (7).

13. Procédé de fabrication d'une préparation alimentaire (52) mettant en œuvre une imprimante tridimensionnelle (1, 2, 3) selon l'une quelconque des revendications précédentes.

14. Procédé de fabrication selon la revendication 13, comprenant une étape de chauffe dans laquelle l'élément de cuisson (71), et/ou l'au moins un élément de chauffage additionnel (81, 81', 81"), et/ou l'au moins un élément de préchauffage (61) induisent un gradient de température dans l'au moins un aliment (5) ou dans la préparation alimentaire (52) selon une séquence prédéfinie.
